# FASCICULE DE BREVET EUROPEEN

(11) **EP 3 719 293 B1**
(45) Date de publication et mention de la délivrance du brevet: **19.01.2022**
(21) Numéro de dépôt: 20166198.0
(22) Date de dépôt: 27.03.2020
(51) Int. Cl.: F02K 1/72

(54) **TURBORÉACTEUR COMPORTANT UNE NACELLE ÉQUIPÉE D'UN SYSTÈME INVERSEUR ET UNE GRILLE DE CASCADES MOBILE**
TURBOREAKTOR, DER EINE MIT EINEM SCHUBUMKEHRSYSTEM UND EINEM BEWEGLICHEN KASKADENGITTER AUSGESTATTETE GONDEL UMFASST
TURBOJET ENGINE COMPRISING A NACELLE PROVIDED WITH AN INVERSER SYSTEM AND A MOBILE CASCADE GRID

(30) Priorité: 04.04.2019 FR 1903630
(43) Date de publication de la demande: 07.10.2020
(73) Titulaire: AIRBUS OPERATIONS, 31060 Toulouse Cedex 9 (FR)
(72) Inventeur: GARDES, Pascal, 31060 Toulouse (FR); RIDRAY, Frédéric, 32600 L'ISLE JOURDAIN (FR); ORTEU, Benoit, 31000 TOULOUSE (FR); GOUGEON, Pascal, 31620 BOULOC (FR); PIARD, Frédéric, 31170 TOURNEFEUILLE (FR)
(74) Mandataire: Cabinet Le Guen Maillet

(56) Documents cités:
- US-A1- 2016 363 097
- US-A1- 2017 226 962
- US-A1- 2017 328 304

## Description

### DOMAINE TECHNIQUE

La présente invention concerne un turboréacteur double flux qui comporte une nacelle équipée d'un système inverseur et d'une grille de cascades mobile, ainsi qu'un aéronef comportant au moins un tel turboréacteur double flux.

### ETAT DE LA TECHNIQUE ANTERIEURE

Un aéronef comporte un fuselage de chaque côté duquel est fixée une aile. Sous chaque aile est suspendu au moins un turboréacteur double flux qui se décompose de l'avant vers l'arrière, en une entrée d'air, une soufflante, un noyau moteur et une tuyère d'éjection. L'air aspiré par la soufflante pénètre par l'entrée d'air et se sépare en un flux primaire qui traverse le noyau moteur et un flux secondaire qui s'écoule autour du noyau moteur dans une veine secondaire prévue à cet effet. Les deux flux se rejoignent pour être expulsés à travers la tuyère d'éjection.

Chaque turboréacteur double flux est fixé sous l'aile par l'intermédiaire d'un mât qui est fixé entre la structure de l'aile et la structure du turboréacteur double flux.

Le turboréacteur double flux comporte le noyau moteur et une nacelle qui est fixée autour du moteur pour délimiter entre eux la veine secondaire et former le capot de soufflante.

La nacelle comporte un ensemble fixe disposé à l'avant et qui inclut en particulier le capot de soufflante et un ensemble mobile qui est disposé à l'arrière de l'ensemble fixe et qui est mobile en translation d'une position avancée dans laquelle l'ensemble mobile est accolé à l'ensemble fixe et une position reculée dans laquelle l'ensemble mobile est reculé par rapport à l'ensemble fixe de manière à ouvrir une fenêtre entre eux, où cette fenêtre est ouverte entre la veine secondaire et l'extérieur de la nacelle.

La nacelle comporte un système inverseur qui comprend une pluralité de portes de blocage fixées à l'ensemble mobile, où chacune est mobile entre une position rentrée dans laquelle elle n'est pas en travers de la veine secondaire et une position déployée dans laquelle elle est positionnée en travers de la veine secondaire pour diriger le flux secondaire vers la fenêtre dégagée par le recul de l'ensemble mobile.

L'ensemble mobile porte également une grille de cascades portant des déflecteurs, qui en position reculée, se positionnent en travers de l'ouverture pour orienter au mieux le flux secondaire vers l'extérieur.

L'ensemble mobile est déplacé en translation par des vérins fixés entre l'ensemble fixe et l'ensemble mobile.

En position reculée et déployée, les vérins doivent compenser les efforts générés par l'inversion de poussée, c'est-à-dire les efforts qui s'exercent sur la grille de cascades et les portes de blocage. Il est alors nécessaire de mettre en place des vérins de grande taille qui peuvent reprendre ces efforts, ce qui est pénalisant du point de vue du poids et de l'encombrement.

Il est donc nécessaire de trouver un arrangement différent qui permet de réduire la taille des vérins.

Les documents US-A-2017/328304 et US-A-2017/226962 divulguent des turboréacteurs de l'état de la technique.

### EXPOSE DE L'INVENTION

Un objet de la présente invention est de proposer un turboréacteur double flux qui comporte une nacelle équipée d'un système inverseur et une grille de cascades mobile qui se déplace entre deux positions extrêmes et assurent une partie de la transmission des efforts de l'inversion de poussée.

A cet effet, est proposé un turboréacteur double flux comportant un moteur et une nacelle entourant le moteur et où une veine secondaire d'un flux secondaire est délimitée entre la nacelle et le moteur, ladite nacelle comportant :
- un carter de soufflante comportant une paroi extérieure,
- un ensemble fixe comportant une structure fixe et solidaire du carter de soufflante,
- un ensemble mobile comportant une structure mobile sur laquelle sont fixés un capot mobile et un cadre à zones ajourées à l'avant du capot mobile, la structure mobile étant mobile en translation sur la structure fixe selon une direction de translation entre une position avancée dans laquelle la structure mobile est positionnée de manière à ce que le capot mobile soit rapproché et prolonge la paroi extérieure, et une position reculée dans laquelle la structure mobile est positionnée de manière à ce que le capot mobile soit éloigné vers l'arrière de la paroi extérieure de manière à ouvrir une fenêtre entre la veine secondaire et l'extérieur de la nacelle, où les zones ajourées se positionnent en travers de la fenêtre en position reculée,
- une pluralité de portes de blocage, où chacune est montée mobile sur la structure mobile entre une position stockée dans laquelle la porte de blocage est en dehors de la veine secondaire et une position déployée dans laquelle la porte de blocage s'étend en travers de la veine secondaire,
- un ensemble de vérins prévu pour assurer le déplacement en translation de la structure mobile de la position avancée à la position reculée et inversement, où la position reculée correspond à une mise en butée des vérins,
- au moins une grille de cascades montée sur le cadre et disposée en travers de la zone ajourée, où la ou chaque grille de cascades est montée coulissante sur le cadre parallèlement à la direction de translation entre deux butées,
- pour chaque grille de cascades, au moins une butée avant limitant le déplacement de ladite grille de cascades vers l'avant et au moins une butée arrière limitant le déplacement de ladite grille de cascades vers l'arrière,
- pour chaque grille de cascades, au moins un ressort de compression qui repousse la grille de cascades vers l'arrière pour une mise en butée contre une butée arrière, et
- pour chaque grille de cascades, la structure fixe comporte au moins un élément d'arrêt contre lequel la grille de cascades vient en butée lors du déplacement de la position avancée vers la position reculée, et où le ou chaque élément d'arrêt est arrangé pour garantir un jeu fonctionnel entre la grille de cascades et la butée avant associée, même lorsque la structure mobile atteint la position reculée.

Un tel turboréacteur permet de diminuer la dimension des vérins car, en position reculée et déployée, une partie des efforts est transmise à travers la grille de cascades directement vers l'ensemble fixe et le carter de soufflante et l'autre partie sur l'ensemble fixe via les butées des vérins.

Avantageusement, la grille de cascades comporte deux coulisseaux avant et deux coulisseaux arrière répartis aux quatre coins de la grille de cascades et montés coulissants sur le cadre, et en ce que chaque coulisseau est monté coulissant entre une butée avant disposée à l'avant par rapport au coulisseau et une butée arrière disposée à l'arrière par rapport au coulisseau. Avantageusement, la liaison entre chaque coulisseau et le cadre prend la forme d'une chape dont les parois en U forment les butées.

Avantageusement, pour chaque coulisseau avant, le ressort de compression est disposé entre la butée avant et le coulisseau avant.

L'invention propose également un aéronef comportant au moins un turboréacteur double flux selon l'une des variantes précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant un turboréacteur double flux selon l'invention,
[Fig. 2] est une vue en perspective et de l'intérieur d'une partie d'une nacelle du turboréacteur double flux selon un mode de réalisation particulier de l'invention,
[Fig. 3] est une représentation schématique et en coupe d'un turboréacteur selon l'invention en position avancée et rentrée,
[Fig. 4] est une représentation similaire à celle de la Fig. 3 dans une position intermédiaire,
[Fig. 5] est une représentation similaire à celle de la Fig. 3 en position reculée et déployée, et
[Fig. 6] est une vue en perspective d'un détail de réalisation de l'invention.

### EXPOSE DETAILLE DE MODES DE REALISATION

Dans la description qui suit, les termes relatifs à une position sont pris en référence au sens d'avancement de l'aéronef.

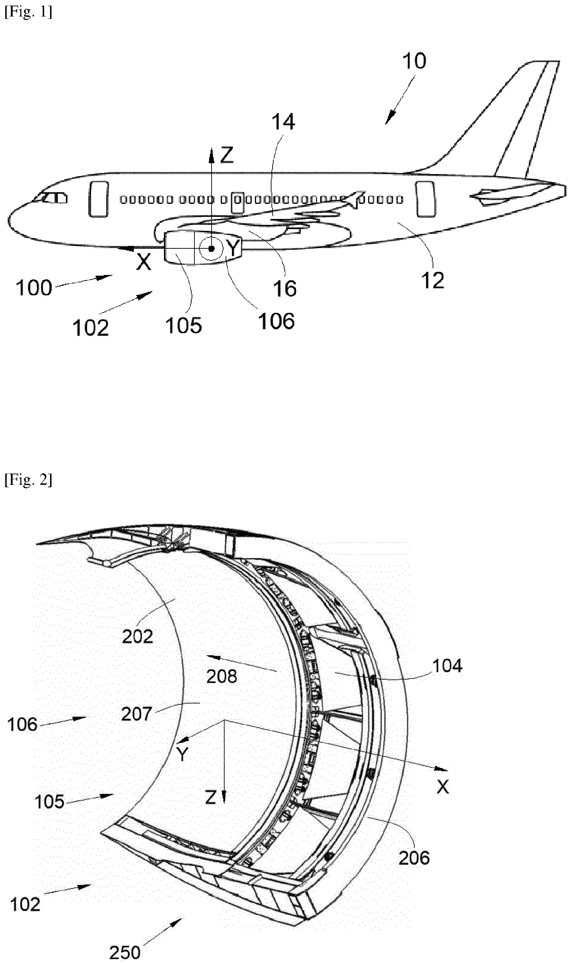

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

Le turboréacteur double flux 100 présente une nacelle 102 et un moteur qui est logé à l'intérieur de la nacelle 102 sous forme d'un noyau moteur et où une veine secondaire est délimitée entre le noyau moteur et la nacelle 102.

La nacelle 102 comporte un ensemble fixe 105 et un ensemble mobile 106 qui est disposé à l'arrière de l'ensemble fixe 105 et qui est mobile en translation entre une position avancée dans laquelle l'ensemble mobile 106 est accolé à l'ensemble fixe 105 et une position reculée dans laquelle l'ensemble mobile 106 est reculé par rapport à l'ensemble fixe 105 de manière à ouvrir une fenêtre entre eux, et où cette fenêtre est ouverte entre la veine secondaire et l'extérieur de la nacelle 102.

Dans la description qui suit, et par convention, on appelle X l'axe longitudinal du turboréacteur double flux 100 qui est parallèle à l'axe longitudinal de l'aéronef 10 orienté positivement vers l'avant de l'aéronef 10, on appelle Y l'axe transversal qui est horizontal lorsque l'aéronef est au sol, et Z l'axe vertical, ces trois directions X, Y et Z étant orthogonales entre elles.

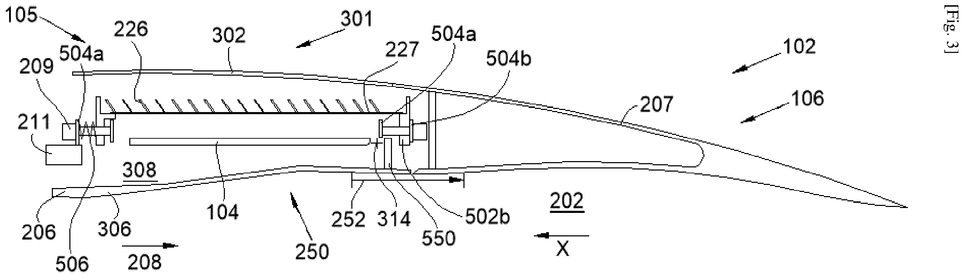

La Fig. 2 montre une partie de la nacelle 102 et les Figs. 3 à 5 montrent trois positions d'un système inverseur 250 de la nacelle 102.

Le turboréacteur double flux 100 présente entre la nacelle 102 et le moteur, la veine secondaire 202 dans laquelle circule le flux secondaire 208 provenant de l'entrée d'air à travers la soufflante et qui s'écoule donc selon le sens d'écoulement qui va de l'avant vers l'arrière de la nacelle 102.

L'ensemble fixe 105 présente une structure fixe 206 qui est montée fixe sur un carter de soufflante 301.

L'ensemble mobile 106 comprend une structure mobile 211 sur laquelle sont fixés un capot mobile 207 formant les parois extérieures de la tuyère et un cadre 209. Le cadre 209 comporte des zones ajourées et prend ici la forme d'un cylindre. Le capot mobile 207 est à l'arrière du cadre 209.

La structure mobile 211 est montée mobile en translation selon une direction de translation qui coïncide avec l'axe longitudinal X sur la structure fixe 206 de la nacelle 102.

Le carter de soufflante 301 comporte une paroi extérieure 302 qui forme la surface extérieure de la nacelle 102 et une paroi intérieure 306 qui forme la paroi extérieure de la veine secondaire 202.

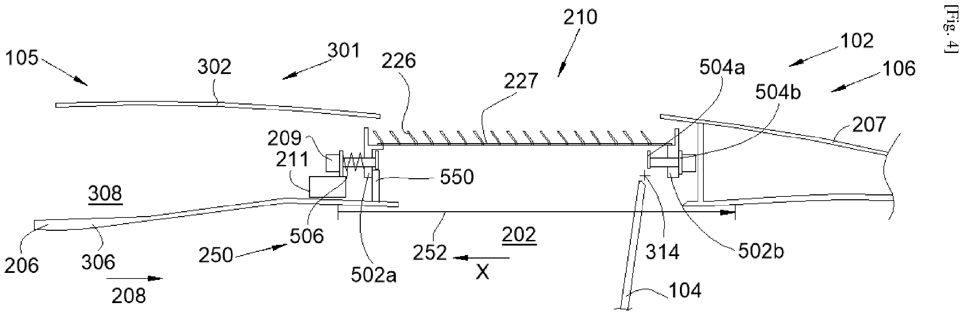

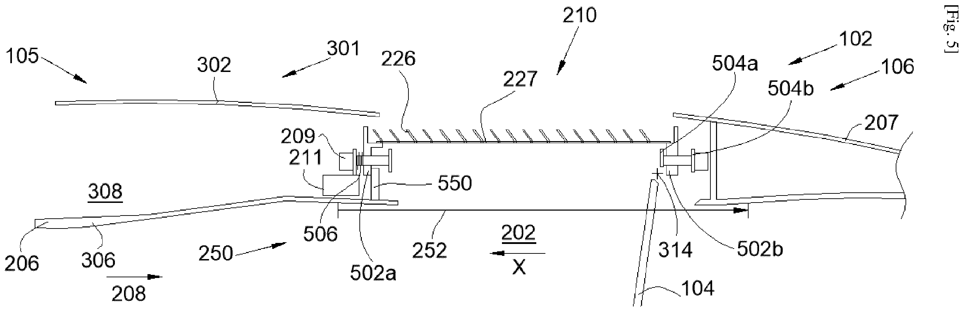

L'ensemble mobile 106 et donc la structure mobile 211 sont mobiles entre la position avancée (Fig. 3) et la position reculée (Fig. 5) et inversement. La Fig. 4 montre une position intermédiaire.

En position avancée, la structure mobile 211 est positionnée le plus en avant possible par rapport à l'axe longitudinal X de manière à ce que le capot mobile 207 soit rapproché et prolonge la paroi extérieure 302 de manière à définir une surface extérieure aérodynamique.

En position reculée, la structure mobile 211 est positionnée le plus en arrière possible par rapport au carter de soufflante 301 de manière à ce que le capot mobile 207 soit éloigné vers l'arrière de la paroi extérieure 302 de manière à ouvrir la fenêtre 210 entre la veine secondaire 202 et l'extérieur de la nacelle 102. C'est-à-dire que l'air provenant du flux secondaire 208 traverse la fenêtre 210 pour rejoindre l'extérieur du turboréacteur double flux 100.

La fenêtre 210 est formée à travers les zones ajourées prévues dans le cadre 209, c'est-à-dire que les zones ajourées se positionnent en travers de la fenêtre 210 en position reculée.

La paroi extérieure 302 délimite la fenêtre 210 en avant par rapport à l'axe longitudinal X et le capot mobile 207 délimite la fenêtre 210 en arrière par rapport à l'axe longitudinal X.

La translation de l'ensemble mobile 106 est réalisée par tous systèmes de glissières appropriés comme par exemple des glissières entre la structure fixe 206 et la structure mobile 211. Le déplacement de la structure mobile 211 est assuré par un ensemble de vérins de type approprié et commandé par une unité de contrôle, par exemple du type processeur, qui commande les déplacements dans un sens ou dans l'autre selon les besoins de l'aéronef 10. Chaque vérin peut prendre par exemple la forme d'un vérin électrique à billes ou tout autre type de vérins appropriés. Un vérin est schématiquement représenté par la flèche référencée 252, le vérin 252 est monté entre la structure fixe 206 et la structure mobile 211.

L'ensemble mobile 106 comporte une pluralité de portes de blocage 104 réparties à l'intérieur de la nacelle 102 autour du moteur et sur la périphérie en fonction de l'ouverture angulaire de la fenêtre 210 autour de l'axe longitudinal X.

Chaque porte de blocage 104 est montée mobile sur la structure mobile 211 entre une position rentrée (Fig. 3) et une position déployée (Figs. 4 et. 5) et inversement. Le passage de la position rentrée à la position déployée s'effectue par une rotation de la porte de blocage 104 vers l'intérieur du turboréacteur 100 autour d'un axe de rotation 314. L'articulation s'effectue ici le long d'un bord arrière de la porte de blocage 104 tandis que le bord avant de la porte de blocage 104 se déplace.

Bien sûr, le mouvement des portes de blocage 104 de la position rentrée à la position déployée peut prendre une autre forme. Par exemple, les portes de blocage peuvent être agencées dans un plan perpendiculaire à l'axe longitudinal X et la rotation s'effectue autour d'un axe parallèle à l'axe longitudinal X. En position rentrée, les portes de blocage se rangent sur le pourtour de la veine secondaire 202 et en position déployée, elles se placent en travers de la veine secondaire 202.

La position rentrée des portes de blocage 104 peut être adoptée lorsque l'ensemble mobile 106 est en position avancée ou en position reculée. La position déployée des portes de blocage 104 ne peut pas être adoptée lorsque l'ensemble mobile 106 est en position avancée.

En position rentrée, chaque porte de blocage 104 est en dehors de la veine secondaire 202. En position déployée, chaque porte de blocage 104 s'étend vers le moteur, c'est-à-dire en travers de la veine secondaire 202 et oriente le flux secondaire 208 vers l'extérieur à travers la fenêtre 210 de manière à créer une contre-poussée.

Pour contrôler encore mieux le flux secondaire 208 sortant de la fenêtre 210, la nacelle 102 comporte au moins une grille de cascades 227 portant des déflecteurs 226. La grille de cascades 227 est montée sur le cadre 209 et disposée en travers de la zone ajourée du cadre 209.

Dans le mode de réalisation de l'invention présenté ici, la paroi extérieure 302 et la paroi intérieure 306 définissent entre elles un compartiment 308 dans lequel sont logés le cadre 209 et les portes de blocage 104 lorsque l'ensemble mobile 106 est en position avancée. En position reculée, le cadre 209 et les portes de blocage 104 sortent du compartiment 308.

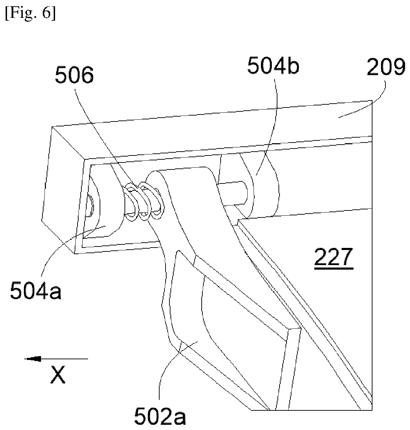

La Fig. 6 montre un détail de montage de la grille de cascades 227 qui est montée coulissante sur le cadre 209 parallèlement à la direction de translation. La grille de cascades 227 peut ainsi se déplacer librement parallèlement à la direction de translation entre deux positions extrêmes. La grille de cascades 227 comporte quatre coulisseaux 502a-b répartis aux quatre coins de la grille de cascades 227 et qui sont montés coulissants sur le cadre 209. Il y a ainsi deux coulisseaux avant 502a et deux coulisseaux arrière 502b. La Fig. 6 montre un coulisseau avant 502a.

Chaque coulisseau 502a-b est monté coulissant entre deux butées 504a-b correspondant aux deux positions extrêmes. Ainsi, pour chaque grille de cascades 227, la nacelle 102 comporte au moins une butée avant 504a limitant le déplacement de la grille de cascades 227 vers l'avant et au moins une butée arrière 504b limitant le déplacement de la grille de cascades 227 vers l'arrière.

Pour chaque coulisseau 502a-b, en particulier les coulisseaux arrière 502b, il y a une butée avant 504a disposée à l'avant par rapport au coulisseau 502a-b et une butée arrière 504b disposée à l'arrière par rapport au coulisseau 502a-b.

Dans le mode de réalisation de l'invention présenté à la Fig. 6, la liaison entre chaque coulisseau 502a-b et le cadre 209 prend la forme d'une chape dont les parois en U forment les butées 504a-b. Chaque coulisseau 502a-b est ainsi libre en translation parallèlement à la direction de translation.

Pour chaque grille de cascades 227, la structure fixe 206 comporte également au moins un élément d'arrêt 550. La grille de cascades 227 vient en butée contre le ou chaque élément d'arrêt 550 avant que la structure mobile 211 atteigne la position reculée.

Pour chaque coulisseau avant 502a, la nacelle 102 comporte également un ressort de compression 506 qui est disposé entre la butée avant 504a et le coulisseau associé, ici le coulisseau avant 502a. Le ressort de compression 506 évite les vibrations de la grille de cascades 227 et en position avancée, la compression du ressort de compression 506 permet la mise en butée de la grille de cascades 227 via au moins des coulisseaux, ici le coulisseau arrière 502b, contre la butée arrière 504b associée. Selon un autre mode de réalisation, le ressort de compression 506 peut être disposé entre le coulisseau arrière 502b et la butée avant 504a associée.

D'une manière générale, pour chaque grille de cascades 227, la nacelle 102 comporte également au moins un ressort de compression 506 qui repousse la grille de cascades 227 vers l'arrière pour une mise en butée contre une butée arrière 504b.

Ainsi, lors du déplacement de l'ensemble mobile 106 depuis la position avancée, la grille de cascades 227 n'est pas rigidement liée au cadre 209, et elle peut donc librement se positionner en fonction des efforts qu'elle subit et ces efforts ne se transmettent pas aux vérins qui déplacent l'ensemble mobile 106.

Lorsque la grille de cascades 227 arrive en butée contre le ou chaque élément d'arrêt 550, la grille de cascades 227 est stoppée. Cette position correspond à la position intermédiaire représentée à la Fig. 4.

L'ensemble mobile 106 continue de se déplacer vers la position reculée, mais la grille de cascades 227 reste fixe contre le ou chaque élément d'arrêt 550 et le déplacement de l'ensemble mobile 106 se poursuit jusqu'à ce que chaque vérin 252 arrive en butée par l'intermédiaire d'une butée mécanique interne audit vérin 252. Chaque ressort de compression 506 est alors comprimé en conséquence. La position reculée correspond à une mise en butée des vérins 252. Dans cette position reculée, les efforts subis par la grille de cascades 227 se transmettent directement à la structure fixe 206 et au carter de soufflante 301 par l'intermédiaire du contact entre la grille de cascades 227 et le ou chaque élément d'arrêt 550, ce qui permet de limiter la taille des vérins. Chaque vérin ne subit alors que les efforts dus à la friction de l'ensemble mobile 106 et aux efforts subis par les portes de blocage 104. Chaque ressort de compression 506 assure une pression sur la grille de cascades 227 contre le ou chaque élément d'arrêt 550. En outre, une autre partie des efforts se transmet à l'ensemble fixe via les butées des vérins. Ainsi, pour chaque grille de cascades 227, la structure fixe 206 comporte au moins un élément d'arrêt 550 contre lequel la grille de cascades 227 vient en butée lors du déplacement de la position avancée vers la position reculée, et où le ou chaque élément d'arrêt 550 est arrangé pour stopper la grille de cascades 227 avant que la structure mobile 211 atteint la position reculée, c'est-à-dire avant que les vérins 252 arrivent en butée, c'est-à-dire également en garantissant un jeu fonctionnel entre chaque coulisseau 502a-b et la butée avant associée 504a et ceci même lorsque la structure mobile 211 atteint la position reculée.

De la même manière, en position reculée, il y a un jeu entre chaque coulisseau 502a-b et la butée avant associée 504a pour garantir la mise en butée de la grille de cascades 227 contre le ou chaque élément d'arrêt 550.

Ainsi, la poursuite du déplacement de la structure mobile 211, jusqu'à la mise en butée des vérins 252, après le contact entre la grille de cascades 227 et le ou chaque élément d'arrêt 550 permet de comprimer le ressort de compression 506 de manière à réaliser une mise en butée de la grille de cascades 227 sur le ou chaque élément d'arrêt 550.

Dans le mode de réalisation de l'invention, chaque élément d'arrêt 550 vient en butée contre une partie avant de la grille de cascades 227.

Dans le mode de réalisation de l'invention présenté sur les Figs. 3 à 5, chaque élément d'arrêt 550 est solidaire de la paroi intérieure 306.

## Revendications

1. Turboréacteur double flux (100) comportant un moteur et une nacelle (102) entourant le moteur et où une veine secondaire (202) d'un flux secondaire (208) est délimitée entre la nacelle (102) et le moteur, ladite nacelle (102) comportant :
- un carter de soufflante (301) comportant une paroi extérieure (302),
- un ensemble fixe (105) comportant une structure fixe (206) et solidaire du carter de soufflante (301),
- un ensemble mobile (106) comportant une structure mobile (211) sur laquelle sont fixés un capot mobile (207) et un cadre (209) à zones ajourées à l'avant du capot mobile (207), la structure mobile (211) étant mobile en translation sur la structure fixe (206) selon une direction de translation entre une position avancée dans laquelle la structure mobile (211) est positionnée de manière à ce que le capot mobile (207) soit rapproché et prolonge la paroi extérieure (302), et une position reculée dans laquelle la structure mobile (211) est positionnée de manière à ce que le capot mobile (207) soit éloigné vers l'arrière de la paroi extérieure (302) de manière à ouvrir une fenêtre (210) entre la veine secondaire (202) et l'extérieur de la nacelle (102), où les zones ajourées se positionnent en travers de la fenêtre (210) en position reculée,
- une pluralité de portes de blocage (104), où chacune est montée mobile sur la structure mobile (211) entre une position stockée dans laquelle la porte de blocage (104) est en dehors de la veine secondaire (202) et une position déployée dans laquelle la porte de blocage (104) s'étend en travers de la veine secondaire (202),
- un ensemble de vérins (252) prévu pour assurer le déplacement en translation de la structure mobile (211) de la position avancée à la position reculée et inversement, où la position reculée correspond à une mise en butée des vérins (252),
- au moins une grille de cascades (227) montée sur le cadre (209) et disposée en travers de la zone ajourée,
**caractérisé en ce que**
la ou chaque grille de cascades (227) est montée coulissante sur le cadre (209) parallèlement à la direction de translation,
et **en ce que** le turboréacteur comporte également
- pour chaque grille de cascades (227), au moins une butée avant (504a) limitant le déplacement de ladite grille de cascades (227) vers l'avant et au moins une butée arrière (504b) limitant le déplacement de ladite grille de cascades (227) vers l'arrière,
- pour chaque grille de cascades (227), au moins un ressort de compression (506) qui repousse la grille de cascades (227) vers l'arrière pour une mise en butée contre une butée arrière (504b), et
- pour chaque grille de cascades (227), la structure fixe (206) comporte au moins un élément d'arrêt (550) contre lequel la grille de cascades (227) vient en butée lors du déplacement de la position avancée vers la position reculée, et où le ou chaque élément d'arrêt (550) est arrangé pour garantir un jeu fonctionnel entre la grille de cascades (227) et la butée avant associée (504a) même lorsque la structure mobile (211) atteint la position reculée.

2. Turboréacteur double flux (100) selon la revendication 1, **caractérisé en ce que** la grille de cascades (227) comporte deux coulisseaux avant (502a) et deux coulisseaux arrière (502b) répartis aux quatre coins de la grille de cascades (227) et montés coulissants sur le cadre (209), et **en ce que** chaque coulisseau (502a-b) est monté coulissant entre une butée avant (504a) disposée à l'avant par rapport au coulisseau (502a-b) et une butée arrière (504b) disposée à l'arrière par rapport au coulisseau (502a-b).

3. Turboréacteur double flux (100) selon la revendication 2, **caractérisé en ce que** la liaison entre chaque coulisseau (502a-b) et le cadre (209) prend la forme d'une chape dont les parois en U forment les butées (504a-b).

4. Turboréacteur double flux (100) selon l'une des revendications 2 ou 3, **caractérisé en ce que** pour chaque coulisseau avant (502a), le ressort de compression (506) est disposé entre la butée avant (504a) et le coulisseau avant (502a).

5. Aéronef (10) comportant au moins un turboréacteur double flux (100) selon l'une des revendications précédentes.

## Patentansprüche

1. Mantelstromtriebwerk (100), welches ein Triebwerk und eine das Triebwerk umgebende Gondel (102) aufweist und wobei ein Sekundärstromkanal (202) für einen Sekundärstrom (208) zwischen der Gondel (102) und dem Triebwerk begrenzt wird, wobei die Gondel (102) aufweist:
- ein Gebläsegehäuse (301), das eine Außenwand (302) aufweist,
- eine ortsfeste Anordnung (105), die eine ortsfeste Struktur (206) aufweist und mit dem Gebläsegehäuse (301) fest verbunden ist,
- eine bewegliche Anordnung (106), die eine bewegliche Struktur (211) aufweist, an welcher eine bewegliche Haube (207) und ein Rahmen (209) mit durchbrochenen Bereichen vorn an der beweglichen Haube (207) befestigt sind, wobei die bewegliche Struktur (211) auf der ortsfesten Struktur (206) in einer Translationsrichtung translatorisch beweglich ist zwischen einer vorgeschobenen Position, in welcher die bewegliche Struktur (211) derart positioniert ist, dass die bewegliche Haube (207) an die Außenwand (302) angenähert ist und sie verlängert, und einer zurückgezogenen Position, in welcher die bewegliche Struktur (211) derart positioniert ist, dass die bewegliche Haube (207) von der Außenwand (302) nach hinten entfernt ist, derart, dass ein Fenster (210) zwischen dem Sekundärstromkanal (202) und der Außenseite der Gondel (102) geöffnet ist, wobei die durchbrochenen Bereiche in der zurückgezogenen Position quer über das Fenster (210) positioniert sind,
- mehrere Blockierklappen (104), wobei jede auf der beweglichen Struktur (211) beweglich zwischen einer verstauten Position, in welcher sich die Blockierklappe (104) außerhalb des Sekundärstromkanals (202) befindet, und einer ausgefahrenen Position, in welcher sich die Blockierklappe (104) quer durch den Sekundärstromkanal (202) erstreckt, angebracht ist,
- eine Anordnung von Zylindern (252), die dafür vorgesehen ist, die translatorische Verschiebung der beweglichen Struktur (211) von der vorgeschobenen Position zur zurückgezogenen Position und umgekehrt sicherzustellen, wobei die zurückgezogene Position einer Anschlagposition der Zylinder (252) entspricht,
- wenigstens ein Kaskadengitter (227), das am Rahmen (209) angebracht und quer über den durchbrochenen Bereich angeordnet ist,
**dadurch gekennzeichnet, dass**
das oder jedes Kaskadengitter (227) auf dem Rahmen (209) parallel zur Translationsrichtung verschiebbar angebracht ist,
und dadurch, dass das Turbostrahltriebwerk außerdem aufweist:
- für jedes Kaskadengitter (227) wenigstens einen vorderen Anschlag (504a), der die Verschiebung des Kaskadengitters (227) nach vorn begrenzt, und wenigstens einen hinteren Anschlag (504b), der die Verschiebung des Kaskadengitters (227) nach hinten begrenzt,
- für jedes Kaskadengitter (227) wenigstens eine Druckfeder (506), welche das Kaskadengitter (227) nach hinten zurückdrückt, damit es an einem hinteren Anschlag (504b) zur Anlage kommt, und
- wobei für jedes Kaskadengitter (227) die ortsfeste Struktur (206) wenigstens ein Stoppelement (550) aufweist, an dem das Kaskadengitter (227) bei der Verschiebung von der vorgeschobenen Position zur zurückgezogenen Position zur Anlage kommt, und wobei das oder jedes Stoppelement (550) dafür eingerichtet ist, ein Funktionsspiel zwischen dem Kaskadengitter (227) und dem zugeordneten vorderen Anschlag (504a) sogar dann zu garantieren, wenn die bewegliche Struktur (211) die zurückgezogene Position erreicht.

2. Mantelstromtriebwerk (100) nach Anspruch 1, **dadurch gekennzeichnet, dass** das Kaskadengitter (227) zwei vordere Gleitstücke (502a) und zwei hintere Gleitstücke (502b) aufweist, die auf die vier Ecken des Kaskadengitters (227) verteilt sind und auf dem Rahmen (209) gleitend angebracht sind, und dadurch, dass jedes Gleitstück (502a-b) zwischen einem vorderen Anschlag (504a), der in Bezug auf das Gleitstück (502a-b) vorn angeordnet ist, und einem hinteren Anschlag (504b), der in Bezug auf das Gleitstück (502a-b) hinten angeordnet ist, gleitend angebracht ist.

3. Mantelstromtriebwerk (100) nach Anspruch 2, **dadurch gekennzeichnet, dass** die Verbindung zwischen jedem Gleitstück (502a-b) und dem Rahmen (209) die Form eines Gabelstücks annimmt, dessen U-förmige Wände die Anschläge (504a-b) bilden.

4. Mantelstromtriebwerk (100) nach einem der Ansprüche 2 oder 3, **dadurch gekennzeichnet, dass** für jedes vordere Gleitstück (502a) die Druckfeder (506) zwischen dem vorderen Anschlag (504a) und dem vorderen Gleitstück (502a) angeordnet ist.

5. Luftfahrzeug (10), welches wenigstens ein Mantelstromtriebwerk (100) nach einem der vorhergehenden Ansprüche aufweist.

## Claims

1. Turbofan engine (100) comprising an engine and a nacelle (102) surrounding the engine and in which a bypass duct (202) of a bypass stream (208) is delimited between the nacelle (102) and the engine, said nacelle (102) comprising:
- a fan casing (301) comprising an outer wall (302),
- a fixed assembly (105) comprising a fixed structure (206) and secured to the fan casing (301),
- a movable assembly (106) comprising a movable structure (211) to which are fixed a movable cowl (207) and a frame (209) with holed zones forward of the movable cowl (207), the movable structure (211) being translationally movable on the fixed structure (206) in a direction of translation between an advanced position in which the movable structure (211) is positioned such that the movable cowl (207) is moved close to and extends the outer wall (302), and a retracted position in which the movable structure (211) is positioned such that the movable cowl (207) is separated aft from the outer wall (302) so as to open a window (210) between the bypass duct (202) and the outside of the nacelle (102), in which the holed zones are positioned across the window (210) in the retracted position,
- a plurality of blocking doors (104), in which each is movably mounted on the movable structure (211) between a stowed position in which the blocking door (104) is out of the bypass duct (202) and a deployed position in which the blocking door (104) extends across the bypass duct (202),
- a set of cylinders (252) provided to ensure the translational displacement of the movable structure (211) from the advanced position to the retracted position and vice versa, in which the retracted position corresponds to a stopping of the cylinders (252),
- at least one cascade grid (227) mounted on the frame (209) and disposed across the holed zone,
**characterized in that**
the or each cascade grid (227) is slidingly mounted on the frame (209) parallel to the direction of translation, and **in that** the turbofan engine also comprises
- for each cascade grid (227), at least one forward stop (504a) limiting the displacement of said cascade grid (227) forwards and at least one rear stop (504b) limiting the displacement of said cascade grid (227) rearwards,
- for each cascade grid (227), at least one compression spring (506) which pushes the cascade grid (227) rearwards for it to stop against a rear stop (504b), and
- for each cascade grid (227), the fixed structure (206) comprises at least one stop element (550) against which the cascade grid (227) comes into abutment upon the displacement from the advanced position to the retracted position, and in which the or each stop element (550) is arranged to guarantee a functional play between the cascade grid (227) and the associated front stop (504a) even when the movable structure (211) reaches the retracted position.

2. Turbofan engine (100) according to Claim 1, **characterized in that** the cascade grid (227) comprises two front slides (502a) and two rear slides (502b) distributed at the four corners of the cascade grid (227) and slidingly mounted on the frame (209), and **in that** each slide (502a-b) is slidingly mounted between a front stop (504a) disposed forward with respect to the slide (502a-b) and a rear stop (504b) disposed aft with respect to the slide (502a-b).

3. Turbofan engine (100) according to Claim 2, **characterized in that** the link between each slide (502a-b) and the frame (209) takes the form of a yoke joint whose U-shaped walls form the stops (504a-b).

4. Turbofan engine (100) according to either of Claims 2 and 3, **characterized in that**, for each front slide (502a), the compression spring (506) is disposed between the front stop (504a) and the front slide (502a).

5. Aircraft (10) comprising at least one turbofan engine (100) according to one of the preceding claims.
